(19) Europäisches Patentamt / European Patent Office / Office européen des brevets

(11) **EP 2 985 303 B1**

(12) **EUROPEAN PATENT SPECIFICATION**

(45) Date of publication and mention
of the grant of the patent:
**20.09.2017 Bulletin 2017/38**

(21) Application number: **14783410.5**

(22) Date of filing: **08.04.2014**

(51) Int Cl.:
*C08G 63/181* (2006.01)    *G03G 9/087* (2006.01)
*C08G 63/183* (2006.01)

(86) International application number:
**PCT/JP2014/060150**

(87) International publication number:
**WO 2014/168131 (16.10.2014 Gazette 2014/42)**

(54) **TONER RESIN AND TONER**

TONERHARZ UND TONER

RÉSINE POUR TONER, ET TONER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.04.2013 JP 2013081254**

(43) Date of publication of application:
**17.02.2016 Bulletin 2016/07**

(73) Proprietor: **Canon Kabushiki Kaisha
Tokyo 146-8501 (JP)**

(72) Inventors:
• **IDA Hayato**
**Tokyo 146-8501 (JP)**
• **HIRASA Takashi**
**Tokyo 146-8501 (JP)**
• **TAMURA Junichi**
**Tokyo 146-8501 (JP)**
• **CHIMOTO Yuya**
**Tokyo 146-8501 (JP)**
• **SHIBATA Takaho**
**Tokyo 146-8501 (JP)**
• **YAMASHITA Daisuke**
**Tokyo 146-8501 (JP)**

(74) Representative: **TBK
Bavariaring 4-6
80336 München (DE)**

(56) References cited:
**JP-A- H04 505 032      JP-A- H04 505 939
JP-A- H05 500 078      JP-A- H06 502 441
JP-A- 2004 307 584    JP-A- 2006 343 522
JP-A- 2010 516 847    JP-A- 2011 068 879
JP-A- 2012 118 466    US-A- 4 140 644
US-B1- 6 414 085**

**Description**

[Technical Field]

The present invention relates to toner for electrophotographic system image-forming methods.

[Background Art]

Recently there has been an increased demand for energy saving which is accompanied by employment of measures for decreasing the fixation temperature of toners upon image formation. One of those measures is the use of polyester resins having a low softening point in order to further decrease the fixation temperature. However, because of the low softening point, toner particles may be melt-adhered to cause blocking during stationary standing thereof such as during storage and transportation.

In order to achieve both the blocking property and low-temperature fixability, techniques have been proposed in which crystalline polyester resins having a sharp melt property such that the viscosity is significantly decreased above the melting point are used (Patent Documents 1 to 3).

Patent Document 4 discloses a toner composition comprising a polyester resin based on terephthalic acid, 2,2-dimethyl-1,3-propanediol, and 2,2'-oxydiethanol.

[Citation List]

[Patent Literature]

[PTL 1] Japanese Patent Publication No. S56-13943
[PTL 2] Japanese Patent Publication No. S62-39428
[PTL 3] Japanese Patent Laid-Open No. H4-120554
[PTL 4] US 4,140,644 A

[Summary of Invention]

[Technical Problems]

When conventional crystalline polyester resins are used as a binder resin for electrophotographic toner, the resins have been excellent in terms of achieving both the fixing performance and blocking property due to the sharp melt property of the resin; however they have issues in terms of charging characteristics. Specifically, low electric resistance and gradual escape of charges after charging of crystalline polyesters have been a big issue.

Thus it is an object of the present invention to provide a crystalline polyester resin for toner which can provide toner having a sharp melt property, excellent fixing performance and blocking property and a preferable charging performance when the resin is used as a resin for toner, as well as to provide toner containing the crystalline polyester resin.

[Solution to Problem]

According to the present invention, there is provided a toner as defined in claims 1-4 and a method for producing the toner as defined in claims 5-8. The crystalline polyester resin contained in the toner of the present invention (hereinafter merely referred to as crystalline resin or as crystalline resin of the present invention) is obtained by condensation polymerization of a dicarboxylic acid component containing at least one compound selected from the group consisting of terephthalic acid, 2, 6-naphthalenedicarboxylic acid and derivatives thereof, and a diol component containing at least one compound selected from the group consisting of 2-methyl-1,3-propanediol and derivatives thereof, the crystalline polyester resin having a weight-average molecular weight as measured by gel permeation chromatography of not less than 5000 and not more than 50000.

[Advantageous Effects of Invention]

According to the present invention, a toner containing a crystalline polyester resin can be provided, wherein the resin has a sharp melt property, excellent fixing performance and blocking property and a preferable charging performance.

[Description of Embodiments]

As a result of exhaustive studies, the present inventors have found that one of the causes of the issues relating to the charging characteristics of crystalline polyester resins is low glass transition temperature and high molecular mobility and thus reduced resistance of crystalline polyester resins for toner. Low-melting point crystalline polyester resins which can be used for toner are basically formed with alkyl diols and alkyl dicarboxylic acids and thus have a glass transition temperature that is at or lower than room temperature. Thus it is believed that the motion of molecular chains at room temperature may not be prevented, resulting in facilitated escape of charges.

Thus a crystalline polyester resin having high glass transition temperature may be used for toner in order to improve the charging performance. However, the glass transition temperature correlates with the melting point and conventional polyester resins having a glass transition temperature at or higher than room temperature may have a melting point of 180°C or higher.

It has been shown that the glass transition temperature and the melting point satisfy the following empirical formula:

$$\text{(Glass transition temperature (°C) + 273)/(melting point (°C) + 273) = 2/3.}$$

As a result of exhaustive studies, the present inventors have revealed that, by introducing a branched structure due to the presence of a methyl group into a linear crystalline polyester resin having high glass transition temperature, the product has a decreased melting point without lowering the glass transition temperature at or below room temperature.

The crystalline resin of the present invention is described for the structure thereof.

The crystalline polyester resin for toner of the present invention is obtained by condensation polymerization of a dicarboxylic acid component containing at least one compound selected from the group consisting of terephthalic acid, 2, 6-naphthalenedicarboxylic acid and derivatives thereof, and a diol component containing at least one compound selected from the group consisting of 2-methyl-1,3-propanediol
and derivatives thereof, the crystalline polyester resin having a weight-average molecular weight as measured by gel permeation chromatography of not less than 5000 and not more than 50000.

As described above, the crystalline resin of the present invention contains, as a dicarboxylic acid component, at least one compound selected from the group consisting of terephthalic acid, 2,6-naphthalenedicarboxylic acid and derivatives thereof.

The derivatives may be exemplified by methyl esters, ethyl esters or acid chlorides of terephthalic acid and 2, 6-naphthalenedicarboxylic acid, all of which may provide similar structures as terephthalic acid and 2,6-naphthalenedicarboxylic acid by condensation polymerization. Specifically, dimethyl terephthalate, diethyl terephthalate, terephthaloyl dichloride, dimethyl 2,6-naphthalenedicarboxylate, diethyl 2,6-naphthalenedicarboxylate, 2,6-naphthalenedicarboxylic acid dichloride and the like may be mentioned.

By containing, as the dicarboxylic acid component, at least one compound selected from the group consisting of terephthalic acid, 2, 6-naphthalenedicarboxylic acid and derivatives thereof, aromatic rings may be linearly aligned, the crystalline resin may have an increased glass transition temperature and crystallization may be facilitated.

In order to increase the glass transition temperature and facilitate crystallization, the dicarboxylic acid component contains terephthalic acid, 2,6-naphthalenedicarboxylic acid and derivatives thereof in total at 50% by mole or more and more preferably 90% by mole or more based on the sum of the dicarboxylic acid component.

As described above, the crystalline resin of the present invention contains, as a diol component, at least one compound selected from the group consisting of 2-methyl-1,3-propanediol,and derivatives thereof. 2-methyl-1,3-propanediol has a branched methyl group and thus the obtained crystalline resin can have a decreased melting point. 2-methyl-1,3-propanediol is preferable because it can further decrease the melting point.

In order to decrease the melting point of the crystalline resin, the diol component contains 2-methyl-1,3-propanediol
and derivatives thereof in total at 50% by mole or more and more preferably 90% by mole or more based on the sum of the diol component.

By containing, as the diol component, a compound selected from 2-methyl-1,3-propanediol
and derivatives thereof, a
rigid back bone may contain branches due to short methyl groups, thereby increasing the interplanar distance of crystals upon crystallization. Due to this, the resulting crystalline resin may have a reduced melting point and may exhibit low-temperature f ixability when contained in toner.

When, on the other hand, the diol component used contains only 1, 3-propanediol or the like without a branch, packing of the back bones may be increased and crystallization of the crystalline resin may be facilitated. However, the resin may have an increased melting point and decreases low-temperature fixability of toner when the resin is contained in the toner, resulting in difficulty in obtaining the desired effect.

When the diol component used contains only 1, 2-butanediol or the like having a large branched moiety, the branched moiety may inhibit crystallization and reduce crystallization.

Upon production of the crystalline resin of the present invention, another carboxylic acid component and alcohol component may be used in combination provided that the above physical properties are not impaired. However, when a long chain aliphatic dicarboxylic acid component having 6 or more carbon atoms or a long chain diol component having 6 or more carbon atoms is used in combination, the resin may have a partially increased mobility, thereby decreasing charging performance. Another carboxylic acid component may include, for example, oxalic acid, malonic acid, maleic acid, fumaric acid, citraconic acid, itaconic acid, glutaconic acid, succinic acid; alicyclic dicarboxylic acids such as 1,1-cyclopentenedicarboxylic acid, 1,4-cyclohexanedicarboxylic acid, 1,3-cyclohexanedicarboxylic acid and 1,3-adamantanedicarboxylic acid; aromatic dicarboxylic acids such as phthalic acid, isophthalic acid, p-phenylenediacetic acid, m-phenylenediacetic acid, p-phenylenedipropionic acid, m-phenylenedipropionic acid, naphthalene-1,4-dicarboxylic acid and naphthalene-1,5-dicarboxylic acid; and trivalent or more polycarboxylic acids such as trimellitic acid, pyromellitic acid, naphthalene tricarboxylic acid, naphthalene tetracarboxylic acid, pyrene tricarboxylic acid and pyrene tetracarboxylic acid. Another monomer component is not limited to the above.

Another alcohol component may include dihydroxy alcohols such as 1,2-propanediol, 1,3-propanediol, 1,4-butanediol, 1,5-pentanediol, 1,4-butenediol, cyclohexanediol and cyclohexanedimethanol. Tri- or higher-hydroxy alcohols may include glycerol, pentaerythritol, hexamethylolmelamine, hexaethylolmelamine and the like. However, another monomer component is not limited to the above.

The crystalline resin of the present invention has a weight-average molecular weight (Mw) as measured by gel permeation chromatography of not less than 5000 and not more than 50000 and more preferably not less than 5000 and not more than 20000.

When the crystalline resin has a weight-average molecular weight (Mw) of less than 5000, the resin does not have sufficient strength and a significantly decreased glass transition temperature (Tg). When the crystalline resin has a weight-average molecular weight (Mw) of more than 50000, the crystalline resin may result in an increased viscosity of a solution in an organic solvent and the like upon production of toner because of the rigid structure of the resin. Therefore the resin may not be deformed at a temperature at or higher than the melting point, thereby decreasing low-temperature fixability of the toner. The weight-average molecular weight (Mw) of the crystalline resin can be readily controlled according to various production conditions of crystalline resins.

The weight-average molecular weight (Mw) of the crystalline resin is measured with gel permeation chromatography (GPC) as described hereinbelow.

To o-dichlorobenzene for gel chromatography is added special grade of 2, 6-di-t-butyl-4-methylphenol (BHT) to the concentration of 0.10 wt/vol% and dissolved at room temperature. A sample bottle to which a crystalline resin and the o-dichlorobenzene with BHT are placed is heated on a hot plate at 150°C to dissolve the crystalline resin. After the crystalline resin is dissolved, the solution is transferred to a pre-heated filter unit which is then mounted on a main device. The filtered material through the filter unit is obtained as a GPC sample. The sample solution is adjusted so as to have the concentration of about 0.15% by mass. The sample solution is subjected to measurement under the following conditions.

Instrument: HLC-8121GPC/HT (Tosoh Corporation)
Detector: RI for high temperatures
Column: TSKgel GMHHR-H HT 2 in series (Tosoh Corporation)
Temperature: 135.0°C
Solvent: o-dichlorobenzene for gel chromatography (with 0.10 wt/vol% of BHT)
Flow rate: 1.0 ml/min
Injection: 0.4 ml

In order to calculate the molecular weight of the crystalline resin, a molecular weight calibration curve is used which is prepared with standard polystyrene resins (e.g., trade name "TSK standard polystyrenes F-850, F-450, F-288, F-128, F-80, F-40, F-20, F-10, F-4, F-2, F-1, A-5000, A-2500, A-1000, A-500"; Tosoh Corporation).

The weight-average molecular weight (Mw) of the crystalline resin of the present invention in toner is determined according to the method described above after isolation of the crystalline resin component from the resin contained in the toner. The crystalline resin component may be isolated by Soxhlet extraction of toner with an ethyl acetate solvent which gives the crystalline resin component as a residue. Whether the molecular structure of the extracted residue is a crystalline resin can be confirmed by NMR spectroscopy.

The crystalline polyester resin for toner of the present invention preferably has a glass transition temperature (Tg) of not less than 25°C and not more than 70°C.

When the glass transition temperature is lower than 25°C, the molecular motion of the crystalline resin under room temperature may not be suppressed, resulting in reduction in charge retention. When the glass transition temperature is higher than 70°C, low-temperature fixability may be decreased. The glass transition temperature is more preferably not less than 40°C in view of retention of charges. The glass transition temperature is more preferably not more than 60°C in view of fixing performance.

The glass transition temperature (Tg) of the crystalline resin of the present invention is determined on a differential scanning calorimeter (Mettler Toledo Inc.: DSC822/EK90) according to ASTM D3418-82. Specifically, calorimetric analyses are carried out in the temperature range of -100°C to 200°C while heating 0.01 g of a sample weighed in an aluminum pan to 200°C with a rate of 10°C/min, cooling the sample from that temperature to -100°C with a cooling rate of 10°C/min and heating the sample with a ramp rate of 10°C/min. The glass transition temperature corresponds to an intersection point on the resulting DSC curve of a line extended from the base line on the low temperature side towards the high temperature side and a tangential line drawn so as to obtain the maximal gradient on the step-wise change curve of glass transition.

When two or more points for the glass transition temperature are detected, the lowest point is regarded as the glass transition temperature of the resin of the present invention.

The glass transition temperature (Tg) of the crystalline resin of the present invention in toner is determined according to the method described above after isolation of the crystalline resin component from the resin contained in the toner. The crystalline resin component may be isolated by Soxhlet extraction of toner with an ethyl acetate solvent which gives the crystalline resin component as a residue. Whether the molecular structure of the extracted residue is a crystalline resin can be confirmed by NMR spectroscopy.

The crystalline polyester resin for toner of the present invention preferably has a melting point (Mp) of not more than 180°C, more preferably not more than 125°C and still more preferably not more than 100°C.

The melting point of 180°C or lower may ensure fixing performance of toner when the resin is contained in toner, the melting point of 125°C or lower may provide toner having excellent low-temperature fixability and the melting point of 100°C or lower may provide extremely excellent low-temperature fixability. The lower limit of the melting point is not particularly limited and is preferably not less than 70°C in view of the blocking property.

The melting point (Mp) of the crystalline resin of the present invention can be determined on a differential scanning calorimeter (Mettler Toledo Inc.: DSC822/EK90) according to ASTM D3418-82. Specifically, calorimetric analyses are carried out while heating 0.01 g of a sample weighed in an aluminum pan from room temperature to 200°C with a ramp rate of 10°C/min. The melting point corresponds to the peak temperature of the endothermic peak in the resulting DSC curve.

The melting point (Mp) of the crystalline resin of the present invention in toner can be determined by directly measuring the toner according to the method described above. During the determination, the melting point of wax contained in the toner may be observed in some cases. In order to discriminate between the melting point of the wax and the melting point resulting from the crystalline resin, the wax is extracted from the toner by Soxhlet extraction using a hexane solvent, the isolated wax is subjected to the differential scanning calorimetry according to the method described above and the obtained melting point is compared with the melting point of the toner.

The crystalline polyester resin for toner of the present invention has a degree of crystallinity as measured by wide-angle X-ray diffraction and calculated with the equation described hereinbelow of not less than 10% and more preferably not less than 20%. When the degree of crystallinity is less than 10%, the proportion of the amorphous portion may be increased, thereby decreasing the blocking property of toner during storage at high temperatures when the resin is contained in the toner.

The upper limit of the degree of crystallinity is not particularly limited and is preferably not more than 70% in view of the efficiency during toner production.

The crystalline property of the crystalline resin of the present invention can be determined according to the degree of crystallinity measured by wide-angle X-ray diffraction and calculated with the equation described hereinbelow. A resin is considered to be a crystalline resin when the resin has the degree of crystallinity of 1% or more.

The degree of crystallinity of the crystalline resin of the present invention can be determined by wide-angle X-ray diffraction under the following conditions.

Instrument for X-ray diffraction: D8 ADVANCE from Bruker AXS
X-ray source: Cu-K$\alpha$ radiation (wavelength: 0.15418 nm)
Power: 40 kV, 40 mA
Slit system: slits DS, SS = 1°, RS = 0.2 mm
Measurement range: $2\theta = 5°$ to 60°
Step interval: 0.02°
Scanning speed: 1°/min

The crystalline resin was ground in a mortar and the wide-angle X-ray diffraction profile was obtained under the above conditions. The resulting wide-angle X-ray diffraction profile is divided into crystalline peaks and amorphous scattering and the degree of crystallinity is calculated from the area thereof using the following equation.

$$\text{(Equation) Degree of crystallinity (\%) = Ic/(Ic + Ia)} \times 100$$

Ic: the total area of the crystalline peaks detected in the range of $5 \leq 2\theta \leq 60$;
Ia: the total area of amorphous scattering detected in the range of $5 \leq 2\theta \leq 60$.

The degree of crystallinity of the crystalline resin in toner is determined according to the method described above after isolation of the crystalline resin component from the resin contained in the toner. The crystalline resin component may be isolated by Soxhlet extraction of toner with an ethyl acetate solvent which gives the crystalline resin component as a residue. Whether the molecular structure of the extracted residue is a crystalline resin can be confirmed by NMR spectroscopy.

Due to the high glass transition temperature, it may be difficult to crystallize the crystalline resin of the present invention. When it is desired to ensure crystallization of the crystalline resin obtained by condensation polymerization of monomers which form the resin, or when the crystalline resin has been determined to have insufficient crystallization, the resin may be subjected to crystallization treatment after condensation polymerization of monomers which form the resin or during production of toner.

The crystallization treatment is not particularly limited and may be carried out according to well-known methods which may include the followings:

(1) A method in which an organic solvent to which a resin obtained by condensation polymerization of monomers has been dissolved with heating is cooled.
(2) A method in which a resin obtained by condensation polymerization of monomers is dissolved in an organic solvent and the organic solvent is then removed from the resulting resin solution.
(3) A method which is a combination of (1) and (2).

The reason in that these methods can promote crystallization of resins is not clear. It is considered, however, that dissolution of the resin in an organic solvent may mimic reduction of the glass transition temperature, resulting in facilitation of crystallization.

The organic solvent which may be used includes toluene, xylene, acetone, tetrahydrofuran, ethyl acetate, propyl acetate and butyl acetate as well as supercritical $CO_2$. Particularly the organic solvent having a solubility parameter (SP value) of not less than 8 and not more than 9 has tendency to facilitate crystallization of the resin.

Specific examples of the method described in (1) may include the following:

(i) To an organic solvent is added a resin obtained by condensation polymerization of monomers and heated to about 60°C to 100°C to dissolve the resin in the organic solvent and prepare a resin solution.
(ii) The obtained resin solution is gradually cooled to 40°C or less, preferably to about room temperature (e.g., about 25°C) with a rate of about 1°C/hr to 50°C/hr to precipitate the resin.

Specific examples of the method described in (2) may include the following:

(i) To an organic solvent is added a resin obtained by condensation polymerization of monomers to prepare a resin solution.
(ii) The obtained resin solution is maintained at about 60°C to 100°C for about 15 minutes to 1 hour.
(iii) The organic solvent is then removed at a temperature of about 4°C to 30°C and pressure of about 250 mmHg to 760 mmHg over about 2 hours to 120 hours to obtain the resin.

The crystalline resin of the present invention has the above features and thus crystallization is halted when the crystalline resin of the present invention is crystallized in the organic solvent and then the organic solvent is eliminated. Therefore the resin has such a feature that it hardly changes over time, e.g., undergoes less development of crystallization, during storage thereof in toner.

Particularly, the crystalline resin of the present invention is preferably such that the amount of heat of fusion as measured by a differential scanning calorimeter (DSC) fulfills the following formula (1), because the resin may undergo less change over time.

$$\text{Formula (1): } H2/H1 \leq 0.1,$$

wherein H1 (J/g) is the amount of heat of fusion during the first heating from 25°C to 200°C with a ramp rate of 10°C/min; and

H2 (J/g) is the amount of heat of fusion during the second heating, after cooling to 25°C with a cooling rate of 1°C/min after the first heating and maintenance at 25°C for 24 hours, from 25°C to 200°C with a ramp rate of 10°C/min.

H1 represents the degree of crystallinity at an initial state and H2 represents the degree of crystallization obtained during gradual cooling in an air atmosphere of the crystalline resin which has been melted once. Accordingly [H2/H1] means how much degree the resin can restore the initial crystallization state in an air atmosphere. The resin having low [H2/H1] thus undergoes less change in the crystal state thereof in an air atmosphere and thus undergoes less change over time during storage.

The amount of heat of fusion of the crystalline resin of the present invention (H1 and H2) can be measured on a differential scanning calorimeter (Mettler Toledo Inc.: DSC822/EK90) according to ASTM D3418-82. Specifically, 0.02g of a sample is weighed in an aluminum pan and the sample is heated from 25°C to 200°C with a ramp rate of 10°C/min to determine the amount of heat of fusion H1 (J/g) during this heating. The sample is then cooled with a cooling rate of 1°C/min to 25°C, maintained at 25°C for 24 hours and again heated from 25°C to 200°C with a ramp rate of 10°C/min to measure the amount of heat of fusion H2 (J/g) during this second heating. In the temperature range where an endothermic peak appears, the area surrounded by a differential scanning calorimetry curve obtained with the first heating having an endothermic peak and the baseline of the differential scanning calorimetry curve is used for calculation of the amount of heat absorbed which corresponds to the amount of heat of fusion H1 (J/g). The area surrounded by a differential scanning calorimetry curve obtained with the second heating having an endothermic peak and the baseline of the differential scanning calorimetry curve is used for calculation of the amount of heat absorbed which corresponds to the amount of heat of fusion H2 (J/g).

The above [H2/H1] can be controlled by constituents of the crystalline resin, for example. Specifically, the above range of [H2/H1] can be obtained by including, as the diol component, a diol having a branched structure such as a compound selected from the group consisting of 2-methyl-1,3-propanediol, 2,2-dimethyl-1,3-propanediol and derivatives thereof.

The amount of heat of fusion (H1 and H2) of the crystalline resin of the present invention in toner can be determined by directly measuring the toner according to the method described above. During the determination, an endothermic peak of wax contained in the toner may be observed in some cases. In order to discriminate the endothermic peak resulting from the wax and the endothermic peak resulting from the crystalline resin, the wax is extracted from the toner by Soxhlet extraction using a hexane solvent, the isolated wax is subjected to the differential scanning calorimetry according to the method described above and the obtained endothermic peak is compared with the endothermic peak of the toner.

The toner of the present invention contains the crystalline polyester resin.

The toner of the present invention can be produced by well-known production methods without limitation such as pulverization method, suspension polymerization method, emulsion aggregation method and dissolution suspension method. Among these production methods, the toner of the present invention is preferably produced by dissolution suspension method in view of controlling the crystalline property of the crystalline resin of the present invention.

The method for producing the toner by dissolution suspension method is hereinafter exemplified.

The dissolution suspension method refers to a method for producing toner by dissolving or dispersing a resin, a colorant, a release agent and the like in an organic solvent, dispersing the resulting solution or dispersion in a poor solvent such as water approximately at the size of toner particles and distilling the organic solvent off in this state. In the dissolution suspension method, toner is produced through the resin dissolution step, the granulating step, the solvent removal step and the washing and drying step.

The method for producing toner of the present invention may include, for example, a method including the step of dissolving at least the crystalline polyester resin for toner of the present invention or a resin corresponding to the crystalline polyester resin for toner of the present invention prior to the crystallization treatment (hereinafter also referred to as the resin before crystallization treatment) in an organic solvent to obtain a resin composition (resin dissolution step), the step of dispersing the resulting resin composition in an aqueous medium to obtain a dispersion (granulating step) and the step of removing the organic solvent from the resulting dispersion (solvent removal step).

<Resin dissolution step>

The resin dissolution step is the step wherein, for example, in an organic solvent the crystalline resin of the present invention or the resin corresponding to the crystalline resin of the present invention prior to the crystallization treatment is dissolved with heating to prepare the resin solution and optionally another resin, colorant, release agent and the like are dissolved or dispersed in the resin solution to produce the resin composition.

Suitable embodiment may be exemplified by, but not limited to, dissolving in an organic solvent a polyester resin which is obtained by condensation polymerization of a dicarboxylic acid component containing at least one compound selected from terephthalic acid, 2,6-naphthalenedicarboxylic acid and derivatives thereof, and a diol component containing at least one compound selected from the group consisting of 2-methyl-1,3-propanediol and derivatives thereof, and having a weight-average molecular weight as measured by gel permeation chromatography of not less than 5000 and not more than 50000 to obtain a resin composition.

The organic solvent used may be any organic solvent that can dissolve the resin. Specifically, the organic solvent may include toluene, xylene, chloroform, methylene chloride, ethyl acetate and the like. In the present invention, it is preferable to use toluene or ethyl acetate because crystallization of the crystalline resin is facilitated and the solvent can be easily removed. When a solvent such as toluene having high efficacy for promoting crystallization is used alone, the resulting toner may easily have hollow structure, resulting in reduction in strength. Accordingly the reduction in strength can be prevented by adding a solvent such as chloroform having low efficacy for promoting crystallization to a solvent such as toluene having high efficacy for promoting crystallization. The combined use of a solvent having high efficacy for promoting crystallization with a solvent having low efficacy for promoting crystallization allows the solid structure of the resulting toner, resulting in an improved strength. As a result the resulting toner has less fracture when the toner is used on copying machines and the like.

The efficacy of the organic solvent for promoting crystallization can be determined based on the presence or absence of the precipitation of the crystalline resin after dissolving the crystalline resin in the organic solvent optionally with heating at a concentration of 70% by mass, cooling to 25°C and allowing the solution to stand for 24 hours. When the efficacy for promoting crystallization is high, the crystalline resin is precipitated in the organic solvent and when the efficacy for promoting crystallization is low, the precipitation does not occur.

In the present invention, the organic solvent preferably contains at least an organic solvent A (solvent having high efficacy for promoting crystallization) and an organic solvent B (solvent having low efficacy for promoting crystallization). The organic media A and B are solvents fulfilling the following conditions (1) and (2).

(1) When in the organic solvent A, a polyester resin to be dissolved in an organic solvent in the resin dissolution step is dissolved at a concentration of 70% by mass and allowed to stand at 25°C for 24 hours, the polyester resin is precipitated.
(2) When in the organic solvent B, a polyester resin to be dissolved in an organic solvent in the resin dissolution step is dissolved at a concentration of 70% by mass and allowed to stand at 25°C for 24 hours, the polyester resin is not precipitated.

The mixing ratio (mass ratio) of the organic solvent A and the organic solvent B is preferably 10/1 to 1/10 in view of achieving both promotion of crystallization of toner and prevention of reduction in strength of toner.

The amount of the organic solvent used is not limited and may be the amount that allows dispersion and granulation of the resin composition in an aqueous medium. Specifically, the mass ratio between the resin composition containing the crystalline resin of the present invention, another resin, colorant, release agent and the like and the organic solvent is preferably 10/90 to 50/50 in view of granulating properties and production efficiency of toner as described hereinbelow.

In the present invention, a binder resin for toner such as resins other than the crystalline resin of the present invention may be used. However, the toner preferably contains the crystalline resin of the present invention at not less than 10% by mass and not more than 100% by mass, and more preferably not less than 30% by mass and not more than 100% by mass based on the total mass of the toner.

In order to use another resin in combination and efficiently exhibit the effect of the crystalline resin of the present invention, it is preferable to design the toner according to a well-known method so that the crystalline resin of the present invention exists on the outside of the resulting toner. For example in the dissolution suspension method, the resulting toner may have the crystalline resin of the present invention on the outside thereof by using the crystalline resin of the present invention as a binder resin of the toner, selecting another resin which has a lower hydrophilicity than the crystalline resin of the present invention or rendering the crystalline resin of the present invention to have higher hydrophilicity than another resin. Another resin which can be used may include well-known thermoplastic binder resins, specifically styrene acrylic resins, epoxy resins, polyester resins, polyurethane resins, polyamide resins, cellulose resins, polyether resins and the like.

Meanwhile a colorant and a release agent are not required to be dissolved in the organic solvent and may be dispersed therein. When the colorant and the release agent are used in dispersed state, they are preferably dispersed by using a disperser such as a bead mill and the like.

The colorant which can be used is not particularly limited and may include well-known organic pigments or oil dyes, carbon black, magnetic powder and the like. Cyan colorants may include copper phthalocyanine compounds and derivatives thereof, anthraquinone compounds, basic dye lake compounds and the like. Magenta colorants may include condensed azo compounds, diketopyrrolopyrrole compounds, anthraquinone, quinacridone compounds, basic dye lake compounds, naphthol compounds, benzimidazolone compounds, thioindigo compounds, perylene compounds and the like.

Yellow colorants may typically include condensed azo compounds, isoindolinone compounds, anthraquinone compounds, azo metal complexes, methine compounds, arylamide compounds and the like.

Black colorants may include carbon black or magnetic powder or colorants obtained by toning the yellow, magenta and cyan colorants to black. The colorants may be used respectively alone or in combination and may be used in the form of solid solution. The colorant used in the present invention may be selected according to hue angle, chroma, lightness, lightfastness, OHP transparency and dispersibility in toner.

In the present invention, the amount of the cyan, magenta, yellow or black colorant is preferably, relative to 100 parts by mass of the resin constituting the toner, not less than 1 part by mass and less than 20 parts by mass.

The release agent which can be used is not particularly limited and may include, for example, low-molecular weight polyolefins such as polyethylenes; silicones having a melting point (softening point) by heating; fatty acid amides such as oleamide, erucamide, ricinoleic acid amide and stearic acid amide; ester waxes such as stearyl stearate; plant waxes such as carnauba wax, rice wax, candelilla wax, vegetable wax and jojoba oil; animal waxes such as bees wax; mineral/petroleum waxes such as montan wax, ozocerite, ceresin, paraffin wax, microcrystalline wax, Fischer-Tropsch wax and ester wax; and modified products thereof.

The release agent preferably has a melting point of 150.0°C or lower, more preferably not less than 40.0°C and not more than 130.0°C and particularly preferably not less than 40.0°C and not more than 110.0°C. The amount of the release agent used is preferably, relative to 100 parts by mass of the resin constituting the toner, not less than 1 part by mass and not more than 20 parts by mass.

<Granulating step>

The granulating step is the step wherein the resulting resin composition is dispersed in an aqueous medium so as to obtain a predetermined toner particle diameter with a dispersing agent to prepare dispersion (granulated product). The aqueous medium mainly is water. The aqueous medium preferably contains a monovalent metal salt at not less than 1% by mass and not more than 30% by mass. Inclusion of the monovalent metal salt may suppress diffusion of the organic solvent contained in the resin composition into the aqueous medium. Thereby the crystalline property of the resin in the resulting toner particles may be improved, the toner may easily have a preferable blocking property, and the toner may have preferable particle size distribution.

The monovalent metal salt may be exemplified by sodium chloride, potassium chloride, lithium chloride and potassium bromide among which sodium chloride and potassium chloride are preferable.

The mixing ratio (mass ratio) between the aqueous medium and the resin composition is preferably aqueous medium/resin composition = 90/10 to 50/50.

The dispersing agent is not particularly limited and may be organic dispersing agents such as cationic, anionic and nonionic surfactants among which anionic surfactants are preferable. For example, sodium alkyl benzene sulphonates, sodium α-olefin sulphonates, sodium alkyl sulphonates, sodium alkyl diphenyl ether disulphonates and the like may be mentioned. Meanwhile inorganic dispersing agents may include tricalcium phosphate, hydroxyapatite, calcium carbonate, titanium oxide, silica powder and the like.

In the present invention, an inorganic dispersing agent which is tricalcium phosphate is preferable because of granulating properties and stability thereof as well as extremely low adverse effect to the properties of the resulting toner.

The amount of the dispersing agent added may be selected according to the particle diameter of the granulated product and when the amount of the dispersing agent added is increased, the particle diameter is decreased. Due to this reason, the amount of the dispersing agent added varies according to the desired particle diameter and is preferably in the range of 0.1 to 15% by mass relative to the resin composition. When the amount is less than 0.1% by mass, coarse powder may be easily produced and when the amount is higher than 15% by mass, unwanted fine particles may be easily produced. The dispersion of the resin composition in the aqueous medium is preferably prepared under high speed shearing. The dispersion of the resin composition in the aqueous medium is preferably granulated to have a weight average particle diameter of 10 μm or lower and more preferably about 4 to 9 μm.

The device which provides high speed shearing may include various high speed dispersers and ultrasonic dispersers.

The weight average particle diameter of the dispersion can be determined by the Coulter method on a particle size distribution analyzer (Coulter Multisizer III: Coulter Inc.).

<Solvent removal step>

The solvent removal step is the step wherein the organic solvent is removed from the resulting dispersion. The organic solvent is preferably removed gradually with stirring. The rate of removal of the organic solvent can also be controlled by optional heating and reduction of pressure.

In a method for forming a dispersion in an aqueous medium such as the dissolution suspension method as exemplified, the crystallization treatment described above may be included in the production procedure, thereby crystallization of the crystalline resin of the present invention can be further secured.

For example, a method may be mentioned in which in a previous step of the solvent removal step, namely in the granulating step, the aqueous medium is maintained at a heated status of 60°C to 100°C and after the granulating step and before the solvent removal step or in the solvent removal step, the aqueous medium is cooled to 40°C or lower, preferably to about room temperature (e.g., about 25°C) during stirring with a cooling rate of 1°C/hr to 50°C/hr to precipitate and crystallize the crystalline resin before removing the organic solvent. It is also a suitable procedure in which the crystalline resin of the present invention is dissolved in the organic solvent over a sufficient length of time in order to decrease the rate of solvent removal and facilitate crystallization. More specifically, a method may be mentioned in which the organic solvent is removed from the resulting dispersion at a temperature of about 4°C to 30°C and pressure of about 250 mmHg to 760 mmHg over 2 hours to 120 hours. It is more preferable that the organic solvent is removed over 24 hours or more and more preferably 72 hours or more.

<Washing and drying step>

After the solvent removal step, the washing and drying step may be carried out in which toner particles are washed multiple times with water and the like and filtered and dried. When the dispersing agent is used which dissolves under acidic conditions such as tricalcium phosphate, it is preferable that the toner particles are washed with hydrochloric acid and the like before washing with water. By washing, the dispersing agent used for granulation can be removed and the toner properties can be improved. After washing, toner can be obtained following filtration and drying. The obtained toner may be optionally added with inorganic fine particles such as silica, alumina, titania and calcium carbonate or resin particles such as vinyl resins, polyester resins, silicone resins while shear force is applied under dry conditions. The inorganic fine particles and resin particles may function as an additive such as an auxiliary agent for charging, an auxiliary agent for flowability and an auxiliary agent for cleaning.

The toner of the present invention preferably has a residual amount of toner on a sieve with a mesh size of 75 $\mu$m of 10% or less as measured after leaving the toner at 40°C for 3 days and sieving the toner with the sieve at a shaking width of 1 mm for 120 seconds. The toner containing the crystalline resin for toner of the present invention on the outside thereof tends to fulfill the above condition and have a further preferable blocking property.

[Examples]

The present invention is hereinafter described in further detail by way of Examples and Comparative Examples which by no means limit the present invention.

(Production of resins)

<Example 1>

(Production of polyester resin 1)

| | |
|---|---|
| Dicarboxylic acid component: | |
| Dimethyl terephthalate | 100 parts by mole |
| Diol component: | |
| 2-Methyl-1,3-propanediol | 200 parts by mole |

In a sufficiently heated two-neck flask the above monomer components were charged, 0.05 parts by mass of tetraisopropyl orthotitanate was added relative to 100 parts by mass of the mixture, nitrogen gas was introduced in the flask which was then heated while maintaining an inert atmosphere to carry out condensation polymerization at 230°C, followed by reduction of pressure and heating to 250°C in order to synthesize a resin (resin 1 before crystallization treatment). The obtained resin was subjected to crystallization treatment as follows. The obtained resin (40 g) was added to a beaker containing 160 g of toluene which was then heated to 90°C to dissolve the resin, followed by gradual cooling to 25°C over 6 hours to precipitate the resin. The precipitated resin was filtered and dried to give polyester resin 1 (weight-average molecular weight [Mw]: 9500, glass transition temperature [Tg] : 42°C, melting point [Mp] : 81°C).

<Example 2>

(Production of polyester resin 2)

Polyester resin 2 (Mw: 6400, glass transition temperature: 30°C, melting point: 79°C) was obtained in the similar manner as Example 1 except that tetraisopropyl orthotitanate was added at the amount of 0.03 parts by mass.

<Example 3>

(Production of polyester resin 3)

Polyester resin 3 (Mw: 42000, glass transition temperature: 50°C, melting point: 83°C) was obtained in the similar manner as Example 1 except that tetraisopropyl orthotitanate was added at the amount of 0.10 parts by mass.

<Example 4>

(Production of polyester resin 4)

| | |
|---|---|
| Dicarboxylic acid component: | |
| Dimethyl terephthalate | 100 parts by mole |
| Diol component: | |
| 2-Methyl-1,3-propanediol | 100 parts by mole |
| 1,4-Butanediol | 100 parts by mole |

Polyester resin 4 (Mw: 17000, glass transition temperature: 28°C, melting point: 107°C) was obtained in the similar manner as Example 1 except that the monomer components used were as shown above.

<Example 5> (not according to the invention)

(Production of polyester resin 5)

| | |
|---|---|
| Dicarboxylic acid component: | |
| Dimethyl terephthalate | 100 parts by mole |
| Diol component: | |
| 2-Methyl-1,3-propanediol | 50 parts by mole |
| 1,4-Butanediol | 150 parts by mole |

Polyester resin 5 (Mw: 18000, glass transition temperature: 30°C, melting point: 179°C) was obtained in the similar manner as Example 1 except that the monomer components used were as shown above.

<Example 7>

(Production of polyester resin 7)

Dicarboxylic acid component:

(continued)

| Dimethyl terephthalate | 100 parts by mole |
| Diol component: | |
| 2-Methyl-1,3-propanediol | 100 parts by mole |
| 1,3-Propanediol | 100 parts by mole |

Polyester resin 7 (Mw: 7700, glass transition temperature: 30°C, melting point: 151°C) was obtained in the similar manner as Example 1 except that the monomer components used were as shown above.

<Example 8>

(Production of polyester resin 8)

| Dicarboxylic acid component: | |
| Dimethyl terephthalate | 100 parts by mole |
| Diol component: | |
| 2-Methyl-1,3-propanediol | 150 parts by mole |
| 1,3-Propanediol | 50 parts by mole |

Polyester resin 8 (Mw: 10000, glass transition temperature: 38°C, melting point: 106°C) was obtained in the similar manner as Example 1 except that the monomer components used were as shown above.

<Example 10>

(Production of polyester resin 10)

| Dicarboxylic acid component: | |
| 2,6-Naphthalenedicarboxylic acid | 100 parts by mole |
| Diol component: | |
| 2-Methyl-1,3-propanediol | 200 parts by mole |

Polyester resin 10 (Mw: 7900, glass transition temperature: 68°C, melting point: 154°C) was obtained in the similar manner as Example 1 except that the monomer components used were as shown above.

<Comparative Example 1>

(Production of polyester resin 12)

| Dicarboxylic acid component: | |
| Decanedicarboxylic acid | 100 parts by mole |
| Diol component: | |
| 1,6-Hexanediol | 200 parts by mole |

In a sufficiently heated two-neck flask the above monomer components were charged, 0.05 parts by mass of tetraisopropyl orthotitanate was added relative to 100 parts by mass of the mixture, nitrogen gas was introduced in the flask which was then heated while maintaining an inert atmosphere to carry out condensation polymerization at 230°C, followed by reduction of pressure and heating to 250°C in order to polymerize a resin. The obtained resin was dried to give polyester resin 12 (Mw: 27000, glass transition temperature: -62°C, melting point: 67°C).

<Comparative Example 2>

(Production of polyester resin 13)

| | |
|---|---|
| Dicarboxylic acid component: | |
| Decanedicarboxylic acid | 100 parts by mole |
| Diol component: | |
| 1,10-Decanediol | 200 parts by mole |

Polyester resin 13 (Mw: 37000, glass transition temperature: -57°C, melting point: 77°C) was obtained in the similar manner as Comparative Example 1 except that the monomer components used were as shown above.

<Comparative Example 3>

(Production of polyester resin 14)

| | |
|---|---|
| Dicarboxylic acid component: | |
| Dimethyl terephthalate | 100 parts by mole |
| Diol component: | |
| 1,3-Propanediol | 200 parts by mole |

Polyester resin 14 (Mw: 9100, glass transition temperature: 38°C, melting point: 227°C) was obtained in the similar manner as Comparative Example 1 except that the monomer components used were as shown above.

<Comparative Example 4>

(Production of polyester resin 15)

| | |
|---|---|
| Dicarboxylic acid component: | |
| Dimethyl terephthalate | 100 parts by mole |
| Diol component: | |
| 1,3-Propanediol: | 200 parts by mole |

Polyester resin 15 (Mw: 9100, glass transition temperature: 38°C, melting point: 230°C) was obtained in the similar manner as Example 1 except that the monomer components used were as shown above.

<Comparative Example 5>

(Production of polyester resin 16)

| | |
|---|---|
| Dicarboxylic acid component: | |
| Dimethyl terephthalate | 100 parts by mole |
| Diol component: | |
| 1,2-ethylene glycol | 200 parts by mole |

Polyester resin 16 (Mw: 15000, glass transition temperature: 65°C, melting point: 243°C) was obtained in the similar manner as Comparative Example 1 except that the monomer components used were as shown above.

<Comparative Example 6>

(Production of polyester resin 17)

| Dicarboxylic acid component: | |
| Dimethyl terephthalate | 100 parts by mole |
| Diol component: | |
| 2-Methyl-1,3-propanediol | 200 parts by mole |

Polyester resin 17 (Mw: 9500, glass transition temperature: 42°C, melting point: not applicable) was obtained in the similar manner as Comparative Example 1 except that the monomer components used were as shown above.

<Comparative Example 7>

(Production of polyester resin 18)

| Dicarboxylic acid component: | |
| Dimethyl terephthalate | 100 parts by mole |
| Diol component: | |
| 2,2-Dimethyl-1,3-propanediol | 200 parts by mole |

Polyester resin 18 (Mw: 7100, glass transition temperature: 58°C, melting point: not applicable) was obtained in the similar manner as Comparative Example 1 except that the monomer components used were as shown above.

<Comparative Example 8>

(Production of polyester resin 19)

| Dicarboxylic acid component: | |
| 2,6-Naphthalenedicarboxylic acid | 100 parts by mole |
| Diol component: | |
| 2-Methyl-1,3-propanediol | 200 parts by mole |

Polyester resin 19 (Mw: 7900, glass transition temperature: 68°C, melting point: not applicable) was obtained in the similar manner as Comparative Example 1 except that the monomer components used were as shown above.

<Comparative Example 9>

(Production of polyester resin 20)

| Dicarboxylic acid component: | |
| Dimethyl terephthalate | 100 parts by mole |
| Diol component: | |
| 1,3-Butanediol | 200 parts by mole |

Polyester resin 20 (Mw: 6400, glass transition temperature: 30°C, melting point: not applicable) was obtained in the similar manner as Example 1 except that the monomer components used were as shown above.

<Comparative Example 10>

(Production of polyester resin 21)

| Dicarboxylic acid component: | |
| Dimethyl terephthalate | 100 parts by mole |
| Diol component: | |
| 1,2-Propanediol | 200 parts by mole |

Polyester resin 21 (Mw: 8900, glass transition temperature: 73°C, melting point: not applicable) was obtained in the similar manner as Example 1 except that the monomer components used were as shown above.

<Comparative Example 11>

(Production of polyester resin 22)

| Dicarboxylic acid component: | |
| Dimethyl terephthalate | 100 parts by mole |
| Diol component: | |
| 1,2-Butanediol | 200 parts by mole |

Polyester resin 22 (Mw: 7200, glass transition temperature: 58°C, melting point: not applicable) was obtained in the similar manner as Example 1 except that the monomer components used were as shown above.

<Comparative Example 12>

(Production of polyester resin 23)

| Dicarboxylic acid component: | |
| Terephthalic acid | 80 parts by mole |
| Dodecyl succinate | 20 parts by mole |
| Diol component: | |
| Bisphenol A-ethylene oxide (EO) 2-mol adduct | 33 parts by mole |
| Bisphenol A-propylene oxide (PO) 2-mol adduct | 67 parts by mole |

Polyester resin 23 (Mw: 14000, glass transition temperature: 56°C, melting point: not applicable) was obtained in the similar manner as Comparative Example 1 except that the monomer components used were as shown above.

<Comparative Example 13>

(Production of polyester resin 24)

| Dicarboxylic acid component: | |
| Terephthalic acid | 80 parts by mole |

(continued)

| Dodecyl succinate | 20 parts by mole |
|---|---|
| Diol component: | |
| Bisphenol A-ethylene oxide (EO) 2-mol adduct | 33 parts by mole |
| Bisphenol A-propylene oxide (PO) 2-mol adduct | 67 parts by mole |

Polyester resin 24 (Mw: 14000, glass transition temperature: 56°C, melting point: not applicable) was obtained in the similar manner as Example 1 except that the monomer components used were as shown above.

Physical properties of the obtained polyester resins are show in Table 1.

<Evaluation of polyester resins>

(Evaluation of melting point)

The obtained polyester resins were measured for the melting point according to the method described above and evaluated according to the following criteria. The evaluation result is shown in Table 1.

(Evaluation criteria)

A: Melting point of 60°C or higher and less than 100°C
B: Melting point of 100°C or higher and 125°C or lower
C: Melting point of higher than 125°C and less than 180°C
D: Melting point of 180°C or higher or no melting point

(Evaluation of charge retention rate)

The obtained polyester resin (sample; 0.01 g) was weighed in an aluminum pan and charged to -600 V with a scorotron charging device. Variation in surface potential was measured in an atmosphere of temperature of 25°C and humidity of 50%RH on a surface electrometer (TREK JAPAN: model 347) for 30 minutes. The measurement result was assigned to the following equation to calculate the charge retention rate which was then evaluated according to the following criteria. The evaluation result is shown in Table 1.

$$\text{Charge retention rate after 30 minutes (\%)} = [\text{Surface potential after 30 minutes}]/[\text{Initial surface potential}] \times 100$$

(Evaluation criteria)

A: Charge retention rate after 30 minutes of 90% or more
B: Charge retention rate after 30 minutes of less than 90% and 50% or more
C: Charge retention rate after 30 minutes of less than 50%

Table 1-1

| | Resin | Dicarboxylic acid | Diol | Crystallization treatment | Crystalline property | Mw | Tg (°C) | Melting point (°C) | Degree of crystallinity (%) | H1 | H2 | H2/H1 | Charge retention rate | Melting point |
|---|---|---|---|---|---|---|---|---|---|---|---|---|---|---|
| Example 1 | 1 | Dimethyl terephthalate | 2-Methyl-1,3-propanediol | Yes | Yes | 9500 | 42 | 81 | 29 | 29 | 0 | 0.00 | A | A |
| Example 2 | 2 | Dimethyl terephthalate | 2-Methyl-1,3-ropanediol | Yes | Yes | 6400 | 30 | 79 | 25 | 26 | 0 | 0.00 | B | A |
| Example 3 | 3 | Dimethyl terephthalate | 2-Methyl-1,3-propanediol | Yes | Yes | 42000 | 50 | 83 | 23 | 21 | 0 | 0.00 | A | A |
| Example 4 | 4 | Dimethyl terephthalate | 2-Methyl-1,3-propanediol 1,4-Butanediol | Yes | Yes | 17000 | 28 | 107 | 15 | 25 | 0 | 0.00 | B | B |
| Example 5 | 5 | Dimethyl terephthalate | 2-Methyl-1,3-propanediol 1,4-Butanediol | Yes | Yes | 18000 | 30 | 179 | 19 | 31 | 30 | 0.97 | B | C |
| | | | | | | | | | | | | | | |
| Example 7 | 7 | Dimethyl terephthalate | 2-Methyl-1,3-propanediol 1,3-Propanediol | Yes | Yes | 7700 | 30 | 151 | 21 | 36 | 0 | 0.00 | B | C |
| Example 8 | 8 | Dimethyl terephthalate | 2-Methyl-1,3-propanediol 1,3-Propanediol | Yes | Yes | 10000 | 38 | 106 | 24 | 19 | 0 | 0.00 | B | B |
| | | | | | | | | | | | | | | |
| Example 10 | 10 | 2,6-Naphthalenedicarboxylic acid | 2-Methyl-1,3-propanediol | Yes | Yes | 7900 | 68 | 154 | 25 | 30 | 0 | 0.00 | A | C |

Table 1-2

| | Resin | Dicarboxylic acid | Diol | Crystallization treatment | Crystalline property | Mw | Tg (°C) | Melting point (°C) | Degree of crystallinity (%) | H1 | H2 | H2/H1 | Charge retention rate | Melting point |
|---|---|---|---|---|---|---|---|---|---|---|---|---|---|---|
| Comparative Example 1 | 12 | Decanedicarboxylic acid | 1,6-Hexanediol | No | Yes | 27000 | -62 | 67 | 56 | 97 | 78 | 0.80 | C | A |
| Comparative Example 2 | 13 | Decanedicarboxylic acid | 1,10-Decanediol | No | Yes | 37000 | -57 | 77 | 52 | 132 | 112 | 0.85 | C | A |
| Comparative Example 3 | 14 | Dimethyl terephthalate | 1,3-Propanediol | No | Yes | 9100 | 38 | 227 | 30 | 68 | 66 | 0.97 | B | D |
| Comparative Example 4 | 15 | Dimethyl terephthalate | 1,3-Propanediol | Yes | Yes | 9100 | 38 | 230 | 30 | 71 | 66 | 0.93 | B | D |
| Comparative Example 5 | 16 | Dimethyl terephthalate | 1,2-ethylene glycol | No | Yes | 15000 | 65 | 243 | 41 | 44 | 41 | 0.93 | A | D |
| Comparative Example 6 | 17 | Dimethyl terephthalate | 2-Methyl-1,3-propanediol | No | No | 9500 | 42 | - | - | - | - | - | A | D |
| Comparative Example 7 | 18 | Dimethyl terephthalate | 2,2-Dimethyl-1,3-propanediol | No | No | 7100 | 58 | - | - | - | - | - | A | D |
| Comparative Example 8 | 19 | 2,6-Naphthalenedicarboxylic acid | 2-Methyl-1,3-propanediol | No | No | 7900 | 68 | - | - | - | - | - | A | D |
| Comparative Example 9 | 20 | Dimethyl terephthalate | 1,3-Butanediol | Yes | No | 6400 | 30 | - | - | - | - | - | B | D |
| Comparative Example 10 | 21 | Dimethyl terephthalate | 1,2-Propanediol | Yes | No | 8900 | 73 | - | - | - | - | - | A | D |
| Comparative Example 11 | 22 | Dimethyl terephthalate | 1,2-Butanediol | Yes | No | 7200 | 58 | - | - | - | - | - | A | D |
| Comparative Example 12 | 23 | Terephthalic acid Dodecyl succinate | BPA-EO adduct BPA-PO adduct | No | No | 14000 | 56 | - | - | - | - | - | A | D |
| Comparative Example 13 | 24 | Terephthalic acid Dodecyl succinate | BPA-EO adduct BPA-PO adduct | Yes | No | 14000 | 56 | - | - | - | - | - | A | D |

EP 2 985 303 B1

<Example 11>

(Production of toner 1)

To a beaker in a water bath were added 11.7 parts by mass of trisodium phosphate dodecahydrate (Wako Pure Chemical Industries, Ltd.) and 1200 parts by mass of ion exchange water to dissolve trisodium phosphate dodecahydrate. The water bath was then heated to 60°C. After the temperature reached to 60°C, an aqueous solution of calcium chloride (Kishida Chemical Co., Ltd.) was added which was obtained by dissolving 5.15 parts by mass of calcium chloride to 100 parts by mass of ion exchange water. The solution was stirred for 30 minutes thereafter to obtain an aqueous solution of tricalcium phosphate corresponding to an aqueous medium containing a dispersing agent.
Next, the following materials:

| | |
|---|---|
| Resin 1 before crystallization treatment (described in Example 1) | 40 parts by mass |
| Colorant | 2 parts by mass |

(cyan pigment, Dainichiseika Color & Chemicals Mfg. Co., Ltd.: Pigment Blue 15:3)

| | |
|---|---|
| Release agent (behenyl behenate, melting point: 75°C) | 4 parts by mass |
| Toluene | 160 parts by mass |

were mixed and heated while stirring to 80°C to dissolve and disperse the materials to prepare a resin composition. The tricalcium phosphate aqueous solution (600 parts by mass) was heated to 80°C while stirring on Clearmix (M Technique Co., Ltd.). To the tricalcium phosphate aqueous solution was added the resin composition, and stirring at 10000 rpm for 10 minutes to obtain dispersion. The obtained dispersion was cooled to 25°C over 12 hours while stirring with a stirring blade, and stirring at a temperature of 25°C and under normal pressure was continued for 3 days to remove toluene. The resulting resin particles were analyzed for the particle diameter by the Coulter method on a particle size distribution analyzer (Coulter Multisizer III: Coulter Inc.) and it was found that the particles had a weight average particle diameter of 5.5 $\mu$m. The particles were washed with a hydrochloric acid aqueous solution, filtered, then washed with ion exchange water and filtered for solid-liquid separation. The obtained solid matter was dried to obtain toner 1. The obtained toner had a weight average particle diameter of 5.5 $\mu$m and had a hollow structure.

<Example 12>

(Production of toner 2)

Toner 2 was produced in the similar manner as Example 11 except that 40 parts by mass of toluene and 120 parts by mass of chloroform were used in combination instead of 160 parts by mass of toluene. The obtained toner had a weight average particle diameter of 5.5 $\mu$m and had a solid structure.
The polyester resin formed in the toner was dissolved by heating in toluene at a concentration of 70% by mass and the solution was left to stand at 25°C for 24 hours to precipitate polyester resin 1 in the form of crystal. When the polyester resin formed in the toner was dissolved by heating in chloroform at a concentration of 70% by mass and the solution was left to stand at 25°C for 24 hours, polyester resin 1 was not precipitated.

<Example 13>

(Production of toner 3)

Toner 3 was produced in the similar manner as Example 12 except that 40 parts by mass of sodium chloride was added to the tricalcium phosphate aqueous solution. The obtained toner had a weight average particle diameter of 5.5 $\mu$m and had a solid structure. As shown in Table 2, the degree of crystallinity was significantly increased by addition of sodium chloride.

<Examples 14 to 16, 18, 19 and 21>

(Production of toners 4 to 6, 8, 9 and 11)

Toners 4 to 6, 8, 9 and 11 were produced in the similar manner as Example 13 except that polyester resins 2, 3, 4, 7, 8 and 10 before crystallization treatment were respectively used instead of the resin 1 before crystallization treatment. All toners obtained had a weight average particle diameter of 5.5 $\mu$m and had a solid structure.

<Comparative Example 14>

(Production of toner 12)

| | |
|---|---|
| Polyester resin 12 | 100 parts by mass |
| Release agent (behenyl behenate, melting point: 75°C) | |
| | 10 parts by mass |
| Colorant | 5 parts by mass |

(cyan pigment, Dainichiseika Color & Chemicals Mfg. Co., Ltd.: Pigment Blue 15:3)
The mixture obtained by mixing the above materials was subjected to melt-kneading on a twin-screw extruder heated at 130°C. The obtained melt-kneading product was cooled and coarsely pulverized with a hammer mill. The obtained coarsely pulverized product was finely pulverized with a turbo mill, the obtained fine powder was classified on an air classifier to obtain toner 12 having a weight average particle diameter of 7 $\mu$m.

<Comparative Example 15>

(Production of toner 13)

Toner 13 having a weight average particle diameter of 7 $\mu$m was produced in the similar manner as Comparative Example 14 except that polyester resin 13 was used instead of polyester resin 12.

<Comparative Examples 16 and 17>

(Production of toners 14 and 15)

Toners 14 and 15 respectively having a weight average particle diameter of 7 $\mu$m were produced in the similar manner as Comparative Example 14 except that polyester resins 14 and 16 were respectively used instead of polyester resin 12 and the melt-kneading was carried out at 250°C.

<Comparative Example 18>

(Production of toner 16)

Toner 16 having a weight average particle diameter of 5.5 $\mu$m was obtained in the similar manner as Example 13 except that polyester resin 17 was used instead of polyester resin 1 before crystallization treatment and the obtained dispersion was cooled from 80°C to 50°C over 10 minutes while stirring with a stirring blade, and stirring at a temperature of 50°C was continued for 5 hours to remove toluene.

<Comparative Examples 19 and 20>

(Production of toners 17 and 18)

Toners 17 and 18 respectively having a weight average particle diameter of 5.5 $\mu$m were produced in the similar manner as Comparative Example 18 except that polyester resins 18 and 19 were respectively used instead of polyester resin 17.

<Comparative Examples 21 to 23>

(Production of toners 19 to 21)

Toners 19 to 21 respectively having a weight average particle diameter of 5.5 $\mu$m were produced in the similar manner as Example 13 except that polyester resins 20 to 22 were respectively used instead of polyester resin 1 before crystallization treatment.

<Comparative Examples 24 and 25>

(Production of toners 22 and 23)

Toners 22 and 23 respectively having a weight average particle diameter of 7 $\mu$m were produced in the similar manner as Comparative Example 14 except that polyester resins 23 and 24 were respectively used instead of polyester resin 12.

(Evaluation of toner)

<Evaluation 1 of blocking property (evaluation using a sieve)>

Toner (10 g) was left to stand at 40°C for 3 days and then sieved on a sieve having a mesh size of 75 $\mu$m at a shaking width of 1 mm for 120 seconds. The residual amount of toner on the sieve was evaluated according to the following criteria. The evaluation result is shown in Table 2.

(Evaluation criteria)

A: the residual amount of toner is 10% or less
B: the residual amount of toner is more than 10%

<Evaluation 2 of blocking property (evaluation by storage stability)>

Toner (100 parts by mass) was dry-mixed with 1. 8 parts by mass of silica fine particles which had a specific surface area as measured by the BET method of 200 m$^2$/g and had been subjected to hydrophobic treatment with silicone oil on a Henschel mixer (Mitsui Mining Co., Ltd.) to prepare toner containing the additive. The toner was left to stand in an incubator with constant temperature of 50°C and constant humidity of 10% for 3 days and the degree of blocking was visually evaluated according to the following criteria. The evaluation result is shown in Table 2.

(Evaluation criteria)

A: After 3 days, even when the blocking of toner occurs, the toner can be dispersed easily with slight vibration
B: After 3 days, the blocking of toner occurs and the toner can be dispersed with continuous vibration
C: After 3 days, the blocking of toner occurs and the toner cannot be dispersed even when force is applied

<Evaluation of low-temperature fixability>

Toner (100 parts by mass) was dry-mixed with 1. 8 parts by mass of silica fine powder which had a specific surface area as measured by the BET method of 200 m$^2$/g and had been subjected to hydrophobic treatment with silicone oil on a Henschel mixer (Mitsui Mining Co., Ltd.) to prepare toner containing the additive. The toner and a ferrite carrier (average particle diameter: 42 $\mu$m) which had been surface coated with a silicone resin were mixed so as to obtain a toner concentration of 8% by mass and prepare a two-component developer. The two-component developer was charged in a commercially available full color digital copying machine (CLC1100, Canon, Inc.) and used to form an unfixed toner image (0.6 mg/cm$^2$) on a receiver paper (64 g/m$^2$). A fixation unit detached from a commercially available full color digital copying machine (imageRUNNER ADVANCE C5051, Canon, Inc.) was altered so that the fixation temperature can be adjusted. The fixation test of the unfixed image was carried out with the fixation unit. The fixation of the unfixed image was visually evaluated under normal temperature and normal humidity with a processing speed of 246 mm/sec. The evaluation result is shown in Table 2.

(Evaluation criteria)

A: The image is able to be fixed at or lower than 140°C
B: The image is able to be fixed at higher than 140°C and at or lower than 160°C
C: The image is only able to be fixed at higher than 160°C

<Evaluation of charge retention rate>

Toner (0.01 g) was weighed in an aluminum pan and charged to -600 V with a scorotron charging device. Variation in surface potential was measured in an atmosphere of temperature of 25°C and humidity of 50%RH on a surface electrometer (TREK JAPAN: model 347) for 30 minutes. The measurement result was assigned to the following equation to calculate the charge retention rate which was then evaluated according to the following criteria. The evaluation result is shown in Table 2.

```
Charge retention rate after 30 minutes (%) = [Surface

potential after 30 minutes]/[Initial surface potential] ×

100
```

(Evaluation criteria)

A: Charge retention rate after 30 minutes of 90% or more
B: Charge retention rate after 30 minutes of less than 90% and 50% or more
C: Charge retention rate after 30 minutes of less than 50%

Table 2-1

|  | Toner | Resin | Crystalline property | Tg (°C) | Melting point (°C) | (Tg + 273)/ (Mp + 273) | Degree of crystallinity (%) | H1 | H2 | H2/ H1 |
|---|---|---|---|---|---|---|---|---|---|---|
| Example11 | 1 | 1 | Yes | 42 | 81 | 0.89 | 28 | 29 | 0 | 0 |
| Example12 | 2 | 1 | Yes | 42 | 80 | 0.89 | 8 | 11 | 0 | 0 |
| Example13 | 3 | 1 | Yes | 42 | 80 | 0.89 | 27 | 28 | 0 | 0 |
| Example14 | 4 | 2 | Yes | 30 | 79 | 0.86 | 25 | 26 | 0 | 0 |
| Example15 | 5 | 3 | Yes | 50 | 83 | 0.91 | 20 | 21 | 0 | 0 |
| Example16 | 6 | 4 | Yes | 28 | 105 | 0.80 | 14 | 25 | 0 | 0 |
| Example18 | 8 | 7 | Yes | 30 | 147 | 0.72 | 19 | 33 | 0 | 0 |
| Example19 | 9 | 8 | Yes | 38 | 108 | 0.82 | 25 | 18 | 0 | 0 |
| Example21 | 11 | 10 | Yes | 68 | 155 | 0.80 | 28 | 28 | 0 | 0 |

(continued)

| | Toner | Resin | Crystalline property | Tg (°C) | Melting point (°C) | (Tg + 273)/ (Mp + 273) | Degree of crystallinity (%) | H1 | H2 | H2/ H1 |
|---|---|---|---|---|---|---|---|---|---|---|
| Comparative Example 14 | 12 | 12 | Yes | -62 | 65 | 0.62 | 52 | 95 | 75 | 0.79 |
| Comparative Example 15 | 13 | 13 | Yes | -57 | 74 | 0.62 | 49 | 129 | 110 | 0.85 |
| Comparative Example 16 | 14 | 14 | Yes | 38 | 210 | 0.64 | 28 | 65 | 64 | 0.98 |
| Comparative Example 17 | 15 | 16 | Yes | 65 | 235 | 0.67 | 39 | 43 | 39 | 0.91 |
| Comparative Example 18 | 16 | 17 | No | 42 | - | - | - | - | - | - |
| Comparative Example 19 | 17 | 18 | No | 58 | - | - | - | - | - | - |
| Comparative Example 20 | 18 | 19 | No | 68 | - | - | - | - | - | - |
| Comparative Example 21 | 19 | 20 | No | 30 | - | - | - | - | - | - |
| Comparative Example 22 | 20 | 21 | No | 73 | - | - | - | - | - | - |
| Comparative Example 23 | 21 | 22 | No | 58 | - | - | - | - | - | - |
| Comparative Example 24 | 22 | 23 | No | 56 | - | - | - | - | - | - |
| Comparative Example 25 | 23 | 24 | No | 56 | - | - | - | - | - | - |

Table 2-2

| | Toner | Resin | Crystalline property | Evaluation 1 of blocking property (sieve) | Low-temperature fixability | Charge retention rate | Evaluation 2 of blocking property |
|---|---|---|---|---|---|---|---|
| Example 11 | 1 | 1 | Yes | A | A | A | A |
| Example 12 | 2 | 1 | Yes | A | A | A | B |
| Example 13 | 3 | 1 | Yes | A | A | A | A |
| Example 14 | 4 | 2 | Yes | A | A | B | A |
| Example 15 | 5 | 3 | Yes | A | B | A | A |
| Example 16 | 6 | 4 | Yes | A | B | B | A |
| Example 18 | 8 | 7 | Yes | A | B | B | A |
| Example 19 | 9 | 8 | Yes | A | B | B | A |
| Example 21 | 11 | 10 | Yes | A | B | A | A |

(continued)

| | Toner | Resin | Crystalline property | Evaluation 1 of blocking property (sieve) | Low-temperature fixability | Charge retention rate | Evaluation 2 of blocking property |
|---|---|---|---|---|---|---|---|
| Comparative Example 14 | 12 | 12 | Yes | A | A | C | A |
| Comparative Example 15 | 13 | 13 | Yes | A | A | C | A |
| Comparative Example 16 | 14 | 14 | Yes | A | C | A | A |
| Comparative Example 17 | 15 | 16 | Yes | A | C | A | A |
| Comparative Example 18 | 16 | 17 | No | B | A | A | C |
| Comparative Example 19 | 17 | 18 | No | B | B | A | C |
| Comparative Example 20 | 18 | 19 | No | A | C | A | A |
| Comparative Example 21 | 19 | 20 | No | B | A | B | C |
| Comparative Example 22 | 20 | 21 | No | A | C | A | A |
| Comparative Example 23 | 21 | 22 | No | B | A | A | C |
| Comparative Example 24 | 22 | 23 | No | B | A | A | C |
| Comparative Example 25 | 23 | 24 | No | B | A | A | C |

## Claims

1. A toner comprising a crystalline polyester resin, wherein
the crystalline polyester resin is obtained by condensation polymerization of:

a dicarboxylic acid component containing at least one compound selected from the group consisting of terephthalic acid, 2,6-naphthalenedicarboxylic acid and derivatives thereof, and
a diol component containing at least one compound selected from the group consisting of 2-methyl-1,3-propanediol and derivatives thereof, the dicarboxylic acid component contains terephthalic acid, 2,6-naphthalenedicarboxylic acid and derivatives thereof in total at not less than 50% by mole based on a sum of the dicarboxylic acid component,
the diol component contains 2-methyl-1,3-propanediol and derivatives thereof in total at not less than 50% by mole based on a sum of the diol component,
the crystalline polyester resin has a weight-average molecular weight as measured by gel permeation chromatography of not less than 5000 and not more than 50000, and wherein
the crystalline polyester has a degree of crystallinity of not less than 10% as measured by wide-angle X-ray diffraction.

2. The toner according to claim 1, wherein the polyester resin has a glass transition temperature of not less than 25°C and not more than 70°C.

3. The toner according to claim 1 or 2 wherein the polyester resin has a melting point of not more than 125°C.

4. The toner according to any one of claims 1 to 3, wherein an amount of heat of fusion of the crystalline polyester resin as measured by a differential scanning calorimeter fulfills the following formula (1):

$$\text{Formula (1): } H2/H1 \leq 0.1$$

wherein H1 (J/g) is an amount of heat of fusion during a first heating from 25°C to 200°C with a ramp rate of 10°C/min, and H2 (J/g) is an amount of heat of fusion during a second heating, after cooling to 25°C with a cooling rate of 1°C/min after the first heating and maintenance at 25°C for 24 hours, from 25°C to 200°C with a ramp rate of 10°C/min.

5. A method for producing the toner according to any one of claims 1 to 4, comprising:

a resin dissolution step of dissolving a polyester resin in an organic solvent to obtain a resin composition,
a granulating step of dispersing the resulting resin composition in an aqueous medium to obtain a dispersion; and
a solvent removal step of removing the organic solvent from the resulting dispersion, wherein,
the polyester resin is obtained by condensation polymerization of
a dicarboxylic acid component containing at least one compound selected from the group consisting of terephthalic acid, 2,6-naphthalenedicarboxylic acid and derivatives thereof, and
a diol component containing at least one compound selected from the group consisting of 2-methyl-1,3-propanediol and derivatives thereof, and wherein
the dicarboxylic acid component contains terephthalic acid, 2,6-naphthalenedicarboxylic acid and derivatives thereof in total at not less than 50% by mole based on a sum of the dicarboxylic acid component,
the diol component contains 2-methyl-1,3-propanediol and derivatives thereof in total at not less than 50% by mole based on a sum of the diol component, and
the polyester resin has a weight-average molecular weight as measured by gel permeation chromatography of not less than 5000 and not more than 50000.

6. The method according to claim 5, wherein:

in the granulating step, a temperature of the aqueous medium is maintained at 60°C to 100°C and
after the granulating step and before the solvent removal step or in the solvent removal step, the aqueous medium is cooled with a cooling rate of 1°C/hr to 50°C/hr.

7. The method according to claim 5 or 6, wherein the aqueous medium contains a monovalent metal salt at not less than 1% by mass and not more than 30% by mass.

8. The method according to any one of claims 5 to 7, wherein:

the organic solvent contains at least an organic solvent A and an organic solvent B;
the organic solvent A is such that, when the polyester resin to be dissolved in the organic solvent in the resin dissolution step is dissolved at a concentration of 70% by mass in the organic solvent A and allowed to stand at 25°C for 24 hours, the polyester resin is precipitated; and
the organic solvent B is such that, when the polyester resin to be dissolved in the organic solvent in the resin dissolution step is dissolved at a concentration of 70% by mass in the organic solvent B and allowed to stand at 25°C for 24 hours, the polyester resin is not precipitated.

**Patentansprüche**

1. Toner, umfassend ein kristallines Polyesterharz, wobei
das kristalline Polyesterharz erhalten ist durch Kondensationspolymerisation von:

einem Dicarbonsäurebestandteil, enthaltend zumindest eine Verbindung ausgewählt aus der Gruppe bestehend aus Terephthalsäure, 2,6-Naphthalendicarbonsäure und Derivaten davon, und
einem Diolbestandteil, enthaltend zumindest eine Verbindung ausgewählt aus der Gruppe bestehend aus 2-Methyl-1,3-propandiol und Derivaten davon, wobei der Dicarbonsäurebestandteil Terephthalsäure, 2,6-Naphthalendicarbonsäure und Derivate davon insgesamt mit nicht weniger als 50 Mol-% basierend auf der Summe des Dicarbonsäurebestandteils enthält, der Diolbestandteil 2-Methyl-1,3-propandiol und Derivate davon insgesamt mit nicht weniger als 50 Mol-% basierend auf der Summe des Diolbestandteils enthält, das kristalline Polyesterharz ein gewichtsgemitteltes Molekulargewicht, wie mittels Gelpermeationschromatographie gemessen, von nicht weniger als 5000 und nicht mehr als 50000 aufweist, und wobei das kristalline Polyesterharz einen Kristallinitätsgrad von nicht weniger als 10%, wie durch Weitwinkelröntgenbeugung gemessen, aufweist.

2. Toner nach Anspruch 1, wobei das Polyesterharz eine Glasübergangstemperatur von nicht weniger als 25°C und nicht mehr als 70°C aufweist.

3. Toner nach Anspruch 1 oder 2, wobei das Polyesterharz einen Schmelzpunkt von nicht mehr als 125°C aufweist.

4. Toner nach einem der Ansprüche 1 bis 3, wobei eine Menge der Fusionswärme des kristallinen Polyesterharz, wie mittels eines Differenzialrasterkalorimeters gemessen, die folgende Formel (1) erfüllt:

$$\text{Formel (1): } H2/H1 \leq 0{,}1$$

wobei H1 (J/g) eine Menge einer Fusionswärme während eines ersten Erwärmens von 25°C auf 200°C mit einer Anstiegsgeschwindigkeit von 10°C/min ist, und H2 (J/g) eine Menge der Fusionswärme während eines zweiten Erwärmens, nach dem Kühlen auf 25°C mit einer Kühlgeschwindigkeit von 1°C/min nach dem ersten Erwärmen und Halten bei 25°C für 24 Stunden, von 25°C auf 200°C mit einer Anstiegsgeschwindigkeit von 10°C/min, ist.

5. Verfahren zum Herstellen des Toners nach einem der Ansprüche 1 bis 4, umfassend:

einen Harzauflösungsschritt des Auflösens eines Polyesterharzes in einem organischen Lösungsmittel, um eine Harzzusammensetzung zu erhalten, einen Granulationsschritt des Dispergierens der resultierenden Harzzusammensetzung in einem wässrigen Medium, um eine Dispersion zu erhalten; und einen Lösungsmittelentfernungsschritt des Entfernens des organischen Lösungsmittels aus der resultierenden Dispersion, wobei das Polyesterharz durch Kondensationspolymerisation erhalten ist von einem Dicarbonsäurebestandteil, enthaltend zumindest eine Verbindung ausgewählt aus der Gruppe bestehend aus Terephthalsäure, 2,6-Naphthalendicarbonsäure und Derivaten davon, und einem Diolbestandteil, enthaltend zumindest eine Verbindung ausgewählt aus der Gruppe bestehend aus 2-Methyl-1,3-propandiol und Derivaten davon, und wobei der Dicarbonsäurebestandteil Terephthalsäure, 2,6-Naphthalendicarbonsäure und Derivate davon insgesamt mit nicht weniger als 50 Mol-% basierend auf der Summe des Dicarbonsäurebestandteils enthält, der Diolbestandteil 2-Methyl-1,3-propandiol und Derivate davon insgesamt mit nicht weniger als 50 Mol-% basierend auf der Summe des Diolbestandteils enthält, und das Polyesterharz ein gewichtsgemitteltes Molekulargewicht, wie mittels Gelpermeationschromatographie gemessen, von nicht weniger als 5000 und nicht mehr als 50000 aufweist.

6. Verfahren nach Anspruch 5, wobei in dem Granulationsschritt die Temperatur des wässrigen Mediums bei 60°C bis 100°C gehalten wird, und nach dem Granulationsschritt und vor dem Lösungsmittelentfernungsschritt oder in dem Lösungsmittelentfernungsschritt das wässrige Medium mit einer Kühlgeschwindigkeit von 1°C/Std. bis 50°C/Std. gekühlt wird.

7. Verfahren nach Anspruch 5 oder 6, wobei das wässrige Medium ein monovalentes Metallsalz mit nicht weniger als 1 Masse% und nicht mehr als 30 Masse% enthält.

8. Verfahren nach einem der Ansprüche 5 bis 7, wobei:

das organische Lösungsmittel zumindest ein organisches Lösungsmittel A und ein organisches Lösungsmittel B enthält;

das organische Lösungsmittel A dergestalt ist, dass, wenn das in dem organischen Lösungsmittel in dem Harzauflösungsschritt zu lösende Polyesterharz in einer Konzentration von 70 Masse% in dem organischen Lösungsmittel A gelöst wird und bei 25°C für 24 Stunden stehengelassen wird, das Polyesterharz präzipitiert ist; und

das organische Lösungsmittel B dergestalt ist, dass, wenn das in dem organischen Lösungsmittel in dem Harzauflösungsschritt zu lösende Polyesterharz in einer Konzentration von 70 Masse% in dem organischen Lösungsmittel B gelöst wird und bei 25°C für 24 Stunden stehengelassen wird, das Polyesterharz nicht präzipitiert ist.

**Revendications**

1. Toner comprenant une résine de polyester cristallin, dans lequel :

la résine de polyester cristallin est obtenue par polymérisation par condensation de :

un composant acide dicarboxylique contenant au moins un composé choisi dans le groupe constitué par l'acide téréphtalique, l'acide 2,6-naphtalènedicarboxylique et des dérivés de ceux-ci, et un composant diol contenant au moins un composé choisi dans le groupe constitué par le 2-méthyl-1,3-propanediol et des dérivés de celui-ci, le composant acide dicarboxylique contient de l'acide téréphtalique, de l'acide 2,6-naphtalènedicarboxylique et des dérivés de ceux-ci en une quantité totale qui n'est pas inférieure à 50 % en moles par rapport à une somme du composant acide dicarboxylique,

le composant diol contient du 2-méthyl-1,3-propanediol et des dérivés de celui-ci en une quantité totale qui n'est pas inférieure à 50 % en moles par rapport à une somme du composant diol, la résine de polyester cristallin a un poids moléculaire moyen en poids tel que mesuré par chromatographie par perméation de gel qui n'est pas inférieur à 5 000 et qui n'est pas supérieur à 50 000, et où :

le polyester cristallin a un degré de cristallinité qui n'est pas inférieur à 10 % tel que mesuré par diffraction des rayons X à grand angle.

2. Toner selon la revendication 1, dans lequel la résine de polyester a une température de transition vitreuse qui n'est pas inférieure à 25°C et qui n'est pas supérieure à 70°C.

3. Toner selon la revendication 1 ou 2, dans lequel la résine de polyester a un point de fusion qui n'est pas supérieur à 125°C.

4. Toner selon l'une quelconque des revendications 1 à 3, dans lequel une quantité de chaleur de fusion de la résine de polyester cristallin telle que mesurée par un calorimètre à balayage différentiel satisfait à la formule (1) suivante :

$$\text{Formule (1) : } H2/H1 \leq 0{,}1$$

dans laquelle H1 (J/g) est une quantité de chaleur de fusion pendant un premier chauffage de 25°C à 200°C avec une vitesse de montée de 10°C/min, et H2 (J/g) est une quantité de chaleur de fusion pendant un second chauffage, après refroidissement à 25°C avec une vitesse de refroidissement de 1°C/min après le premier chauffage et une maintenance à 25°C pendant 24 heures, de 25°C à 200°C avec une vitesse de montée de 10°C/min.

5. Procédé de production du toner selon l'une quelconque des revendications 1 à 4, comprenant :

une étape de dissolution de résine consistant à dissoudre une résine de polyester dans un solvant organique pour obtenir une composition de résine, une étape de granulation consistant à disperser la composition de résine résultante dans un milieu aqueux pour obtenir une dispersion ; et une étape d'élimination de solvant consistant à éliminer le solvant organique de la dispersion résultante,

la résine de polyester étant obtenue par polymérisation par condensation de :

un composant acide dicarboxylique contenant au moins un composé choisi dans le groupe constitué par l'acide téréphtalique, l'acide 2,6-naphtalènedicarboxylique et des dérivés de ceux-ci, et
un composant diol contenant au moins un composé choisi dans le groupe constitué par le 2-méthyl-1,3-propanediol et des dérivés de celui-ci, et dans lequel :

le composant acide dicarboxylique contient de l'acide téréphtalique, de l'acide 2,6-naphtalènedicarboxylique et des dérivés de ceux-ci en une quantité totale qui n'est pas inférieure à 50 % en moles par rapport à une somme du composant acide dicarboxylique,
le composant diol contient du 2-méthyl-1,3-propanediol et des dérivés de celui-ci en une quantité totale qui n'est pas inférieure à 50 % en moles par rapport à une somme du composant diol, et
la résine de polyester a un poids moléculaire moyen en poids tel que mesuré par chromatographie par perméation de gel qui n'est pas inférieur à 5 000 et qui n'est pas supérieur à 50 000.

6. Procédé selon la revendication 5, dans lequel ;
dans l'étape de granulation, une température du milieu aqueux est maintenue entre 60°C et 100°C, et
après l'étape de granulation et avant l'étape d'élimination de solvant ou pendant l'étape d'élimination de solvant, le milieu aqueux est refroidi avec une vitesse de refroidissement de 1°C/h à 50°C/h.

7. Procédé selon la revendication 5 ou 6, dans lequel le milieu aqueux contient un sel de métal monovalent à un taux qui n'est pas inférieur à 1 % en masse et qui n'est pas supérieur à 30 % en masse.

8. Procédé selon l'une quelconque des revendications 5 à 7, dans lequel :

le solvant organique contient au moins un solvant organique A et un solvant organique B ;
le solvant organique A est tel que, lorsque la résine de polyester devant être dissoute dans le solvant organique dans l'étape de dissolution de résine est dissoute à une concentration de 70 % en masse dans le solvant organique A et laissée au repos à 25°C pendant 24 heures, la résine de polyester précipite ; et
le solvant organique B est tel que, lorsque la résine de polyester devant être dissoute dans le solvant organique dans l'étape de dissolution de résine est dissoute à une concentration de 70 % en masse dans le solvant organique B et laissée au repos à 25°C pendant 24 heures, la résine de polyester ne précipite pas.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5613943 B
- JP S6239428 B
- JP H4120554 B
- US 4140644 A